# EUROPEAN PATENT APPLICATION

(11) **EP 1 944 921 A1**
(43) Date of publication of application: **16.07.2008**
(21) Application number: 07121997.6
(22) Date of filing: 30.11.2007
(51) Int. Cl.: H04L 12/56, H04L 29/06

(54) **Packet processing method, packet processing system and computer program for packet processing**

(30) Priority: 15.01.2007 JP 2007005930
(71) Applicant: FUJITSU LIMITED, Kawasaki-shi, Kanagawa 211-8588 (JP)
(72) Inventor: Hamanaka, Naoto c/o Fujitsu Kyushu Network Technologies Limited, Fukuoka-shi Fukuoka 814-8588 (JP); Erami, Akihisa c/o Fujitsu Kyushu Network Technologies Limited, Fukuoka-shi Fukuoka 814-8588 (JP); Takaoka, Hidefumi c/o Fujitsu Kyushu Network Technologies Limited, Fukuoka-shi Fukuoka 814-8588 (JP)
(74) Representative: Fenlon, Christine Lesley

(57) **Abstract**

A packet processing method includes the steps of deciding whether or not a packet has the same contents as a packet that has been processed before the packet (MAC-e PDU) generated based on data received by branches from a mobile terminal (#120), dividing the packet into ES packets of a unit of MAC-es PDU (#121) if the packet is decided not to have the same contents (No in #120), deciding whether or not each ES packet obtained by the division should be a transmission object to a core network (#124), and transmitting the ES packet that is decided to be the transmission object to the core network. In this case, the packet decided to have the same contents in the decision of the step #120 is discarded without performing the processes of the division in the step #121, the decision of the step #124 and the like.

## Description

The present invention relates to a packet processing method, a packet processing system, a computer program and the like in a base station controller of mobile communication.

At present, services such as W-CDMA called third generation mobile communication have become widespread in mobile communication. The third generation mobile communication provides digital mobile phone services that are in conformity with "IMT-2000" standard.

In addition, there is proposed a technique for realizing high speed in the uplink direction while maintaining a basic specification of the third generation mobile communication. This technique is usually called an "HSUPA (High-Speed Uplink Packet Access)" or the like, which is positioned as 3.5 generation with respect to the third generation.

The HSUPA enables the high speed data communication service and the conventional voice communication service to be provided simultaneously on the same carrier by performing code-division multiplex between "E-DCH (Enhanced Dedicated Channel)" that is a newly added transport channel and the conventional channel.

As techniques concerning the HSUPA, there are conventional techniques proposed in U.S. patent application publication Nos. US2005/249138 and US2005/047416.

U.S. patent application publication No. US2005/249138 describes a technique for the purpose of minimizing delay time generated by HARQ (Hybrid Automatic Repeat Request) of the E-DCH when transmitting MAC-e PDU including scheduling information necessary for using base station control scheduling.

In addition, U.S. patent application publication No. US2005/047416 describes a technique for reporting buffer state information of a buffer that stores packet data to be transmitted by a user terminal for assigning scheduling of uplink packet data service.

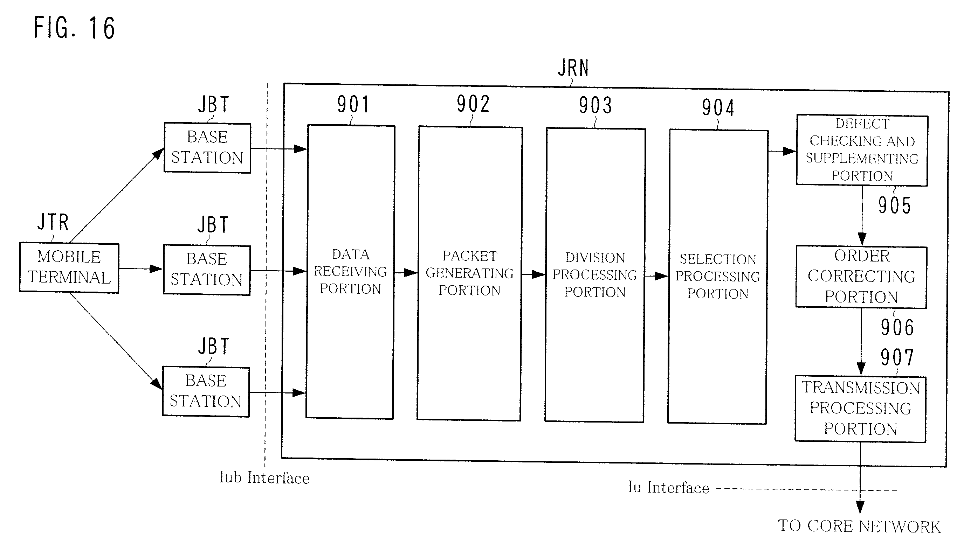

In the mobile communication, as shown in Fig. 16, data transmitted from a mobile terminal is first received by a base station whose communication range includes the mobile terminal. If there is a plurality of such base stations, the data is received by the plurality of base stations. Furthermore, the data received by the base station is transmitted to a base station controller and sent to the other end of the communication with the mobile terminal via a core network after a predetermined process.

Here, an example of the conventional process of the base station controller in the HSUPA will be described with reference to a block diagram shown in Fig. 16. Note that the following description will also refer to flowcharts shown in Figs. 17 and 18 as necessity.

In Fig. 16, when data is transmitted from the mobile terminal JTR, the data is received by three base stations JBT whose communication ranges include the mobile terminal JTR. The received data is transmitted from each of the base stations JBT to the base station controller JRN.

A data receiving portion 901 of the base station controller JRN receives the data transmitted from each of the base stations JBT (#901). A packet generating portion 902 generates a data unit (packet) of a unit called "MAC-e PDU" based on E-DCH FP (Enhanced Dedicated Channel Frame Protocol) by using each of the received data (#902). Here, this is referred to as an "E-DCH packet".

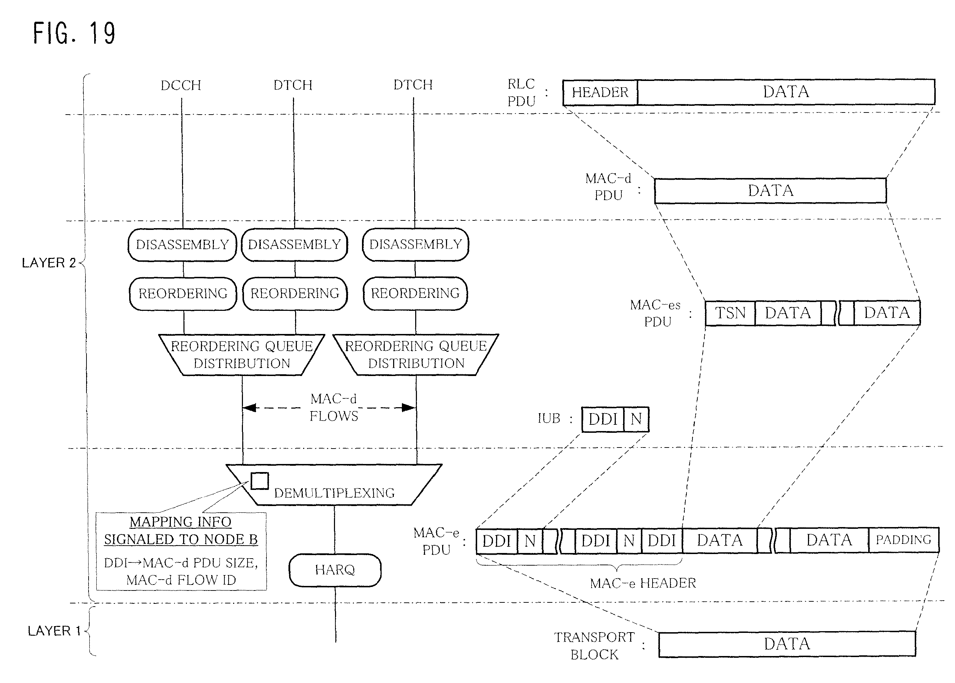

This E-DCH packet has a structure as shown in Fig. 19. "Transport block" shown in Fig. 19 indicates the transmitted data. The E-DCH packet is generated based on this data. As shown in Fig. 19, the E-DCH packet includes information of a header portion and a packet of a unit called "MAC-es PDU".

The MAC-es PDU further includes a packet of a unit called "MAC-d PDU".

Since data is received from three base stations in the example shown in Fig. 16, three E-DCH packets corresponding to them are generated.

The packet generating portion 902 checks whether or not the generated E-DCH packet is normal (#903). If it is normal (Yes in #904), the E-DCH packet is sent to a division processing portion 903. If it is not normal (No in #904), the E-DCH packet is discarded (#905).

The division processing portion 903 divides the generated E-DCH packet by the unit of the MAC-es PDU (#906). As shown in Fig. 19, the MAC-es PDU includes order identifying information called a TSN (Transmission Sequence Number).

When the division process is finished for one E-DCH packet, the division processing portion 903 stores the MAC-es PDU included in it for each TSN in a storage area corresponding to the base station JBT that has transmitted the data to be original of the E-DCH packet (#907).

Three E-DCH packets having the same contents are generated based on data transmitted from three base stations JBT. Therefore, three MAC-es PDU's included in them are generated and stored for each TSN.

A selection processing portion 904 performs a process for selecting one of three MAC-es PDU's for each TSN as data to be transmitted to the other end of the communication with the mobile terminal JTR. In this process, one of three MAC-es PDU's that has become a first object of process by the selection processing portion 904 is selected. Although it is preferable to select one of the three based on data transmitted via a line in the best state, i.e., the one having the best quality, the MAC-es PDU does not include information about quality. Therefore, the one that has become a first object of process is selected here.

More specifically, when the division process is finished for one E-DCH packet and the MAC-es PDU's included in them are stored, the MAC-es PDU's are retrieved sequentially (#908). It is checked whether or not other MAC-es PDU corresponding to the retrieved MAC-es PDU, i.e., other MAC-es PDU having the same TSN based on the data transmitted from a different base station JBT is already selected as a transmission object (#909).

If it is already selected (Yes in #909), the retrieved MAC-es PDU is discarded (#910). If it is not selected (No in #909), the MAC-es PDU is selected as a transmission object (#911), and it is recorded that the MAC-es PDU of the transmission object is decided for the TSN (#912). This record enables confirmation that other MAC-es PDU is already selected for the TSN when the MAC-es PDU having the same TSN based on the data transmitted from the different base station JBT becomes an object of decision in the step #909 later. The process from the step #908 to the step #912 is repeated for each of the MAC-es PDUs included in one E-DCH packet (#913).

Usually, since the MAC-es PDU included in the E-DCH packet that has become a first object of the process (first E-DCH packet) is selected as the transmission object, each TSN is recorded as selected one at the time point when the process is performed on the first E-DCH packet (#912). Therefore, even if two other E-DCH packets having the same contents are transmitted, all the MAC-es PDU's included in them become objects to be discarded (#910).

However, in the first E-DCH packet, there may be a case where all the TSN's included in them are not set as selected ones. It is because a part of the MAC-es PDU's may be dropped when a malfunction occurs, for example. In this case, the MAC-es PDU corresponding to the dropped portion included in two other E-DCH packets (remaining E-DCH packets) having the same contents is selected as the transmission object (#910). Thus, even if there is a defect of data in the first E-DCH packet, it can be compensated.

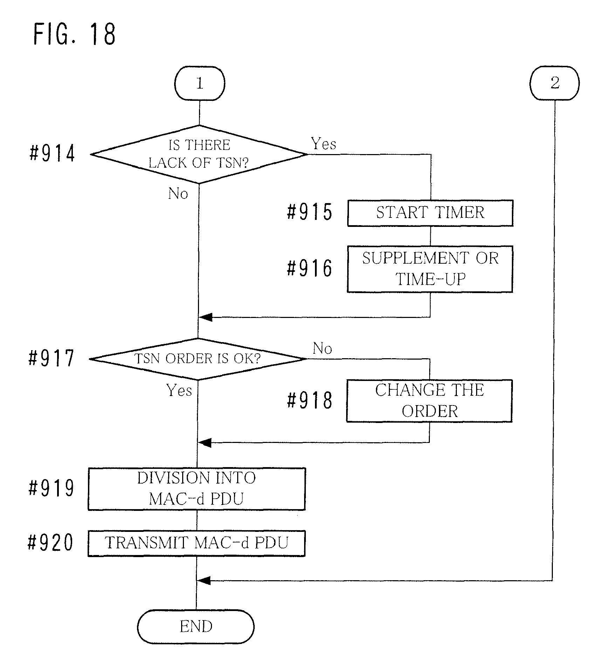

A defect checking and supplementing portion 905 receives the MAC-es PDU selected as the transmission object and checks whether or not it is prepared for each of the TSN's, i.e., whether or not there is a defect of the MAC-es PDU (#914 shown in Fig. 18). If there is a defect (Yes in #914), a timer is started (#915).

If the MAC-es PDU that supplements the defect portion is transmitted before time-out, it is supplemented (#916). Thus, if the MAC-es PDU is prepared for every TSN, the MAC-es PDU's are sent to an order correcting portion 906. If the time is up (#916), the MAC-es PDUs prepared at that time are sent to the order correcting portion 906.

The order correcting portion 906 corrects the order of the transmitted MAC-es PDU's to the order of the TSN (#917 and #918), the MAC-es PDU's are sent to a transmission processing portion 907. The transmission processing portion 907 divides the MAC-es PDU by the unit of the MAC-d PDU (#919) and sends them to the core network CN in the order transmitted (#920).

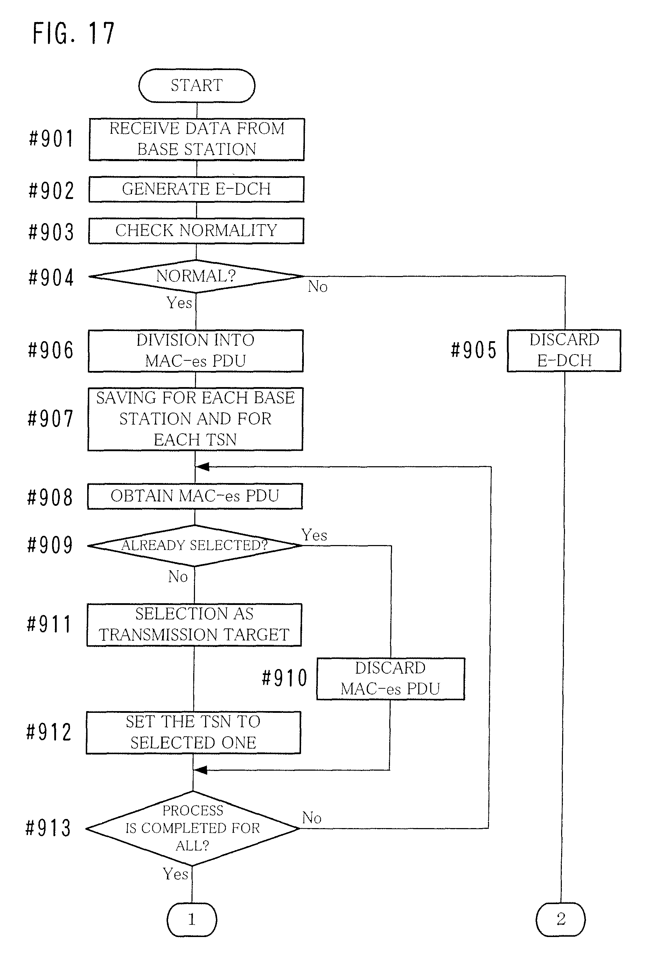

In the conventional method described above, the division process by the unit of the MAC-es PDU (#906 shown in Fig. 17) and the deciding process (#909) are performed with respect to every generated E-DCH packet. Thus, even if there is a defect in the first E-DCH packet, the defect can be compensated in other E-DCH packets corresponding to it.

However, if there are no defects in the first E-DCH packet, all the MAC-es PDU's included in the other E-DCH packets corresponding to it are discarded so that the division process and the deciding process are performed in vain with respect to the other E-DCH packets. Therefore, it is not efficient.

In addition, the waste increases as the number of MAC-es PDUs included in the E-DCH packet (the number of multiplex) is larger.

It is therefore desirable to provide a method and system for processing packets in mobile communication, in which a packet generated based on data received by a plurality of base stations from a mobile terminal can be processed more efficiently than the conventional way.

A packet processing method according to an embodiment of the present invention is a processing method with respect to a packet generated based on data received by a plurality of branches from a mobile terminal in mobile communication. The packet processing method includes a first decision step for deciding whether or not a packet has the same contents as a packet that has been processed before the packet, a division step for dividing the packet subjected to the first decision into small packets of a smaller unit if the packet is decided not to have the same contents in the first decision step, a second decision step for deciding whether or not each of the small packets obtained by the division should be a transmission object to be transmitted to the other end of the communication with the mobile terminal, and a transmission step for transmitting the small packet that is decided to be the transmission object in the second decision step. If the packet is decided to have the same contents in the first decision step, the packet is discarded without performing the processes of the division step, the second decision step and the transmission step with respect to the packet.

Since the first decision step includes deciding identity of the packet, it is possible to specify the packet having the same contents as a packet that have been already processed, so that the processes of the division step, the second decision step and the transmission step for the packet can be omitted. Thus, process efficiency can be improved.

The packet processing method may be a packet processing method that is used in the HSUPA service, for example.

In addition, the packet generated based on the received data may be a packet based on E-DCH FP, for example.

Preferably, in the first decision step, it may be decided that the packet has the same contents if CFN and a CRC value included in the packet are the same.

Alternatively, it may be decided that the packet has the same contents if CFN, SN, and a CRC value included in the packet are the same.

Note that the branch may be a base station and a base station controller in mobile communication, for example.

According to the present invention, in the mobile communication, it is possible to perform the process with respect to a packet generated based on data received by a plurality of base stations from a mobile terminal more efficiently than the conventional method.

Reference will now be made, by way of example, to the accompanying drawings, in which:

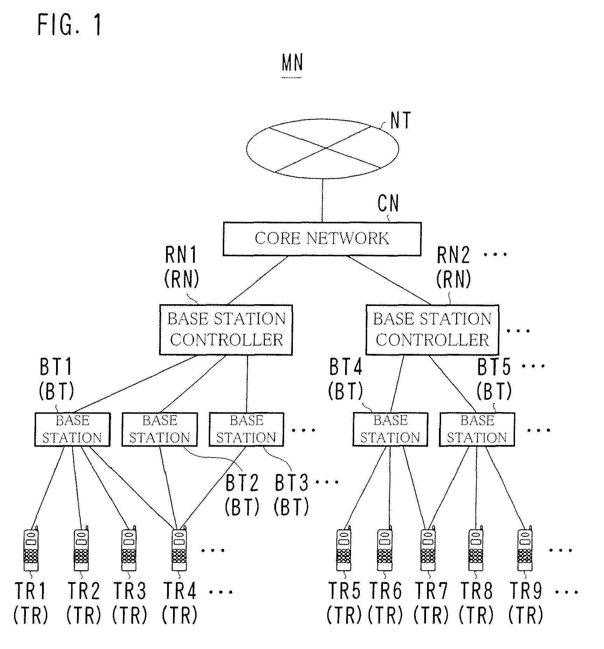

Fig. 1 is a diagram showing an example of a mobile communication network according to an embodiment of the present invention.

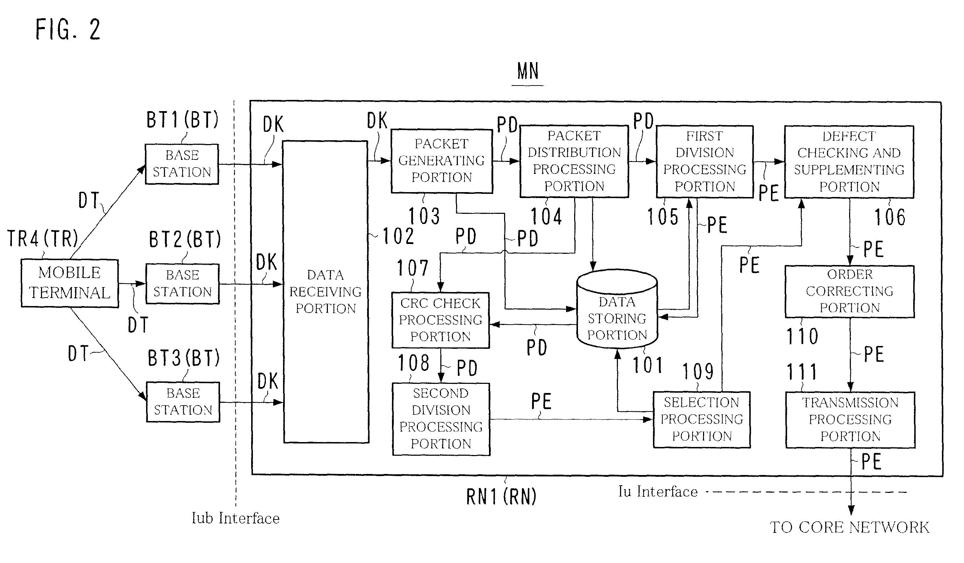

Fig. 2 is a diagram showing an example of a functional structure of a base station controller.

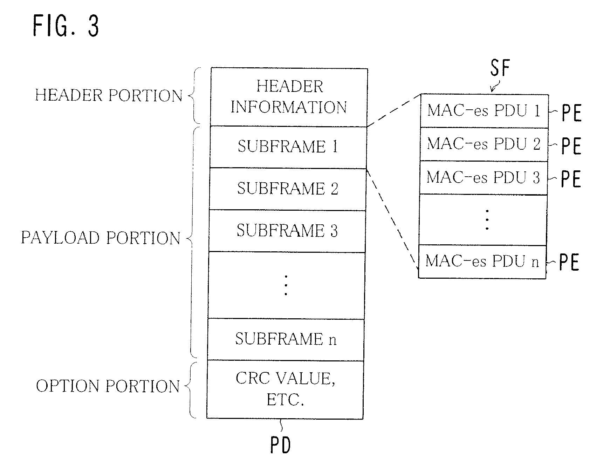

Fig. 3 is a diagram showing a structure of an E-DCH packet.

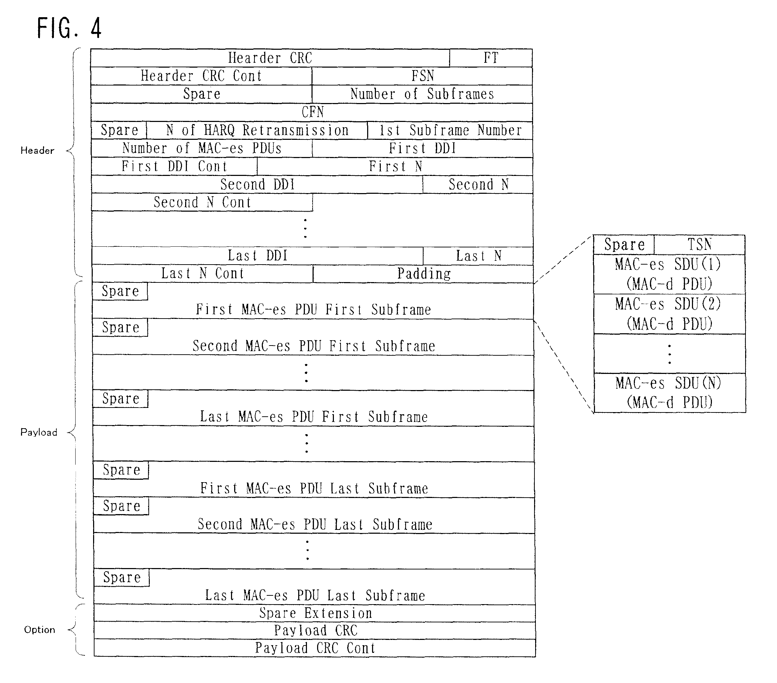

Fig. 4 is a diagram for explaining a format of the E-DCH packet.

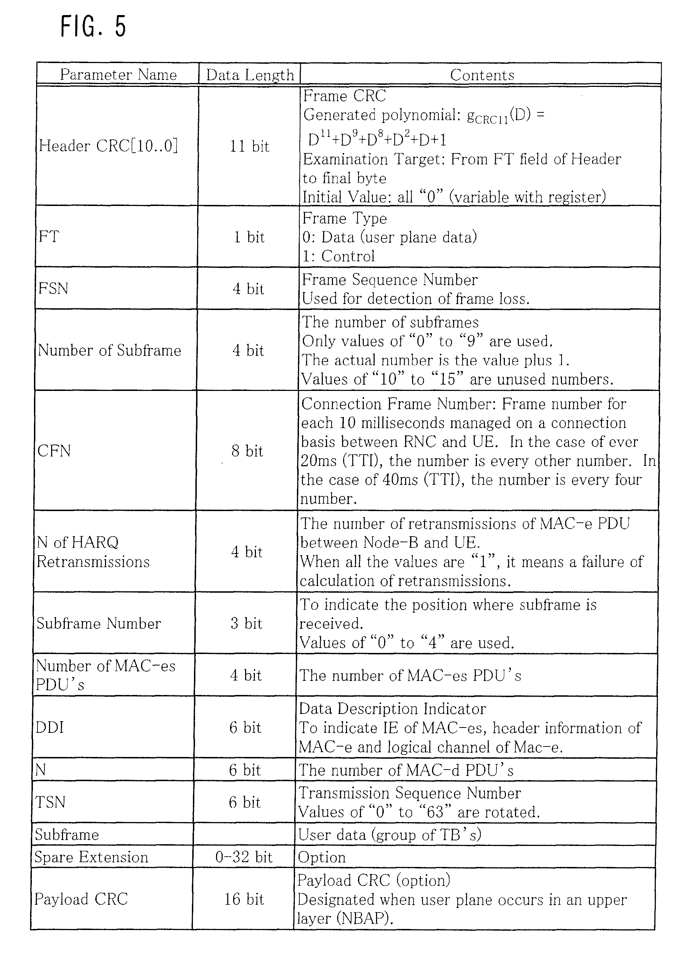

Fig. 5 is a diagram showing explanations of parameters shown in Fig. 4.

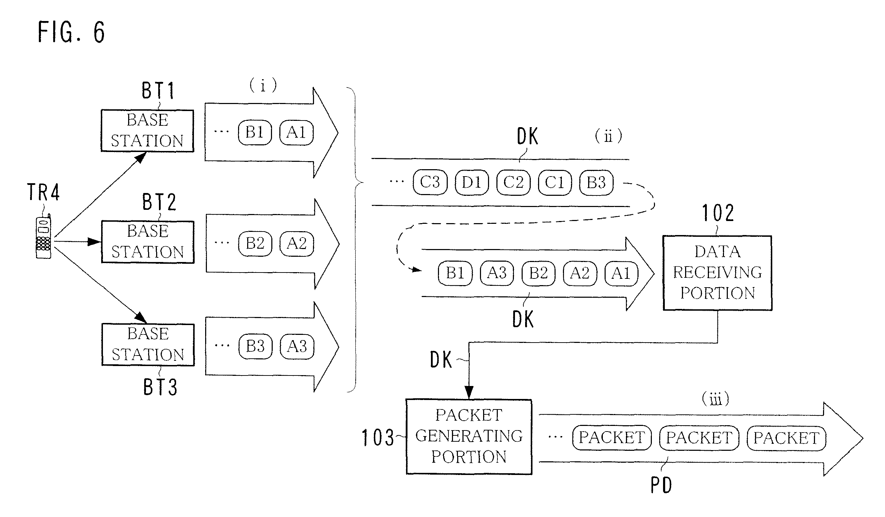

Fig. 6 is a diagram for explaining a process when the E-DCH packet is generated from base station data.

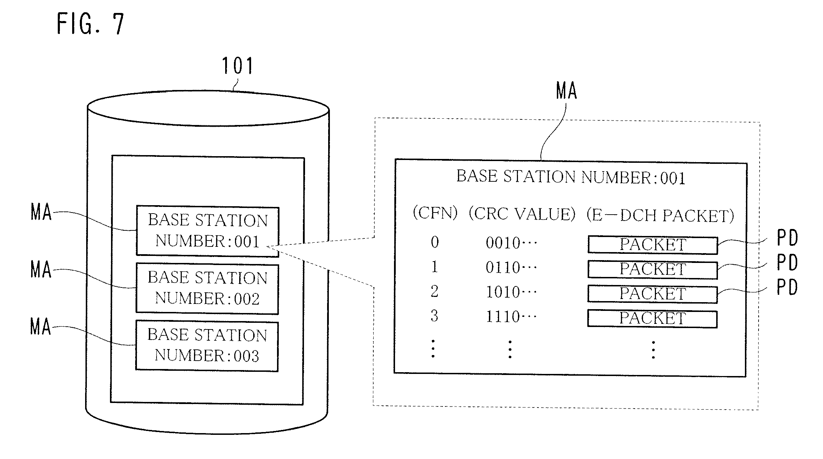

Fig. 7 is a diagram showing a storage area that stores the E-DCH packet.

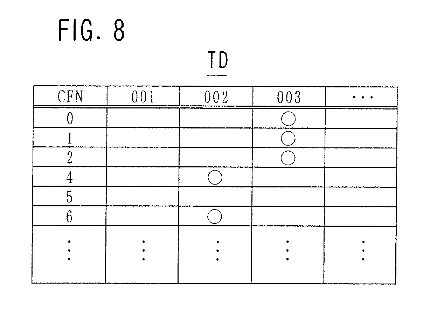

Fig. 8 is a diagram showing an E-DCH packet check table.

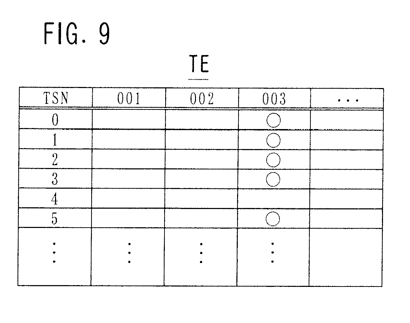

Fig. 9 is a diagram showing an example of an ES packet check table.

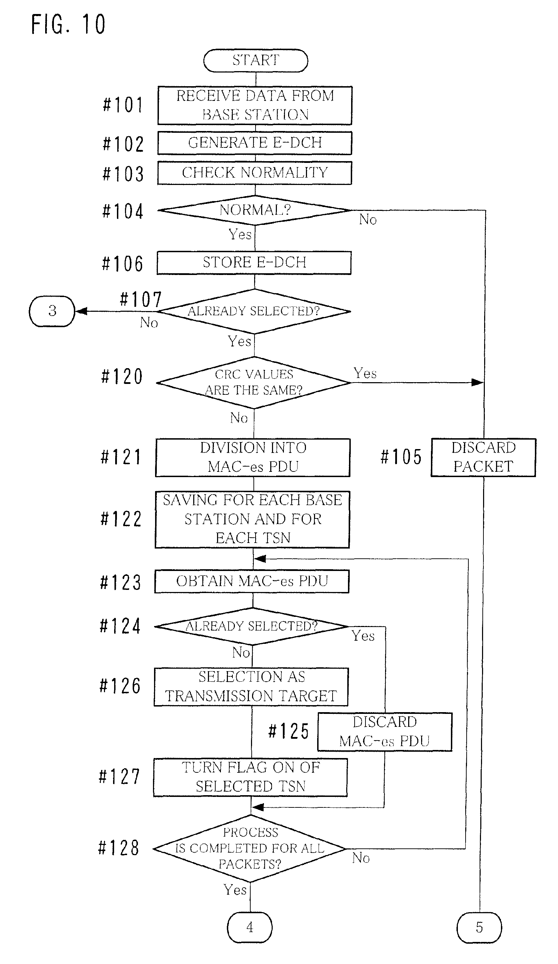

Fig. 10 is a flowchart for explaining a flow of a process from reception of the base station data to transmission of the E-DCH packet in a base station controller.

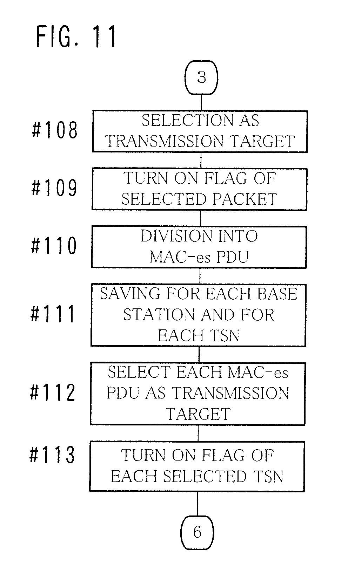

Fig. 11 is a flowchart for explaining a flow of a process from reception of the base station data to transmission of the E-DCH packet in the base station controller.

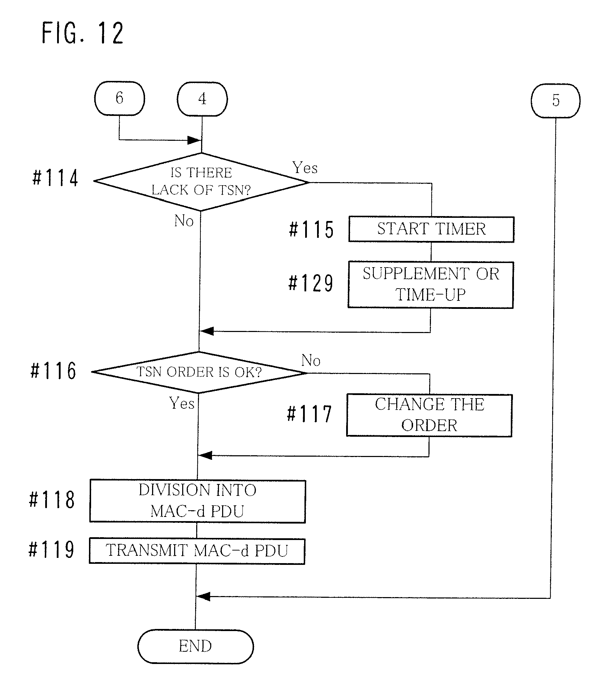

Fig. 12 is a flowchart for explaining a flow of a process from reception of the base station data to transmission of the E-DCH packet in the base station controller.

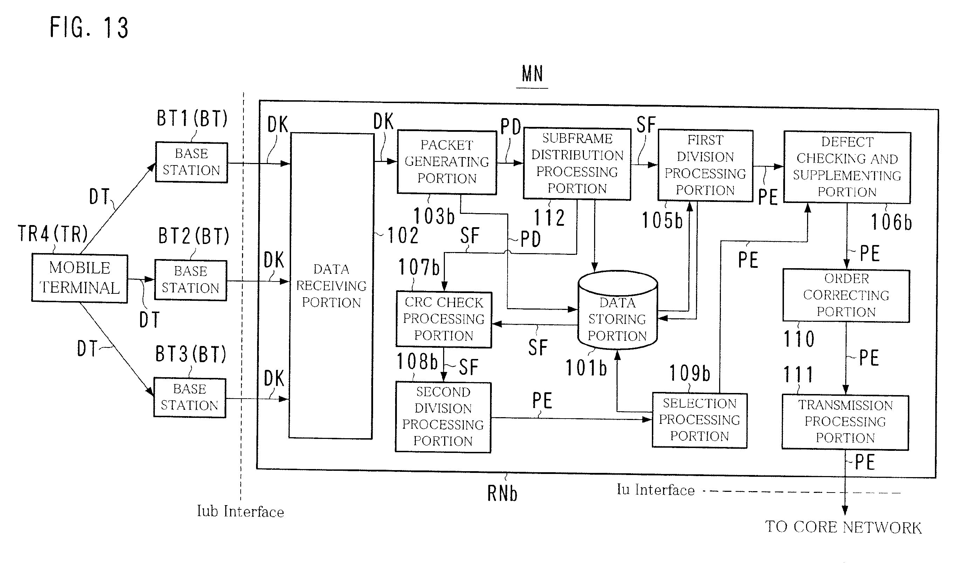

Fig. 13 is a diagram showing another example of the functional structure of the base station controller.

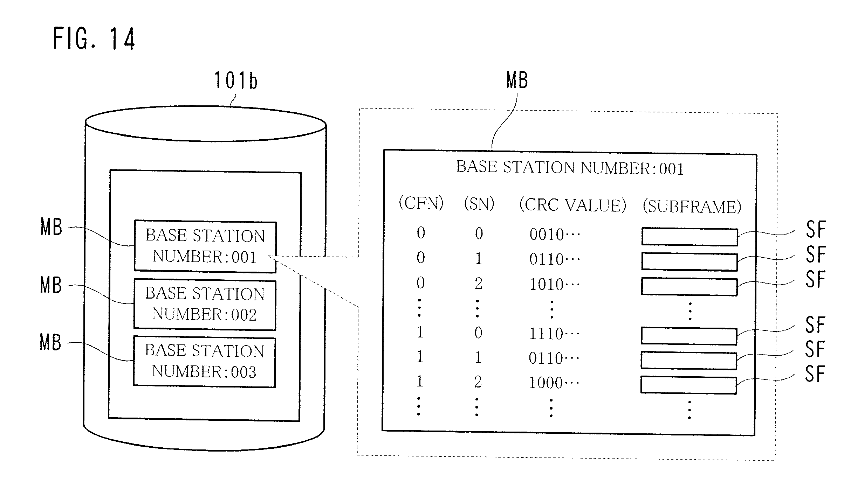

Fig. 14 is a diagram showing a storage area that stores a subframe.

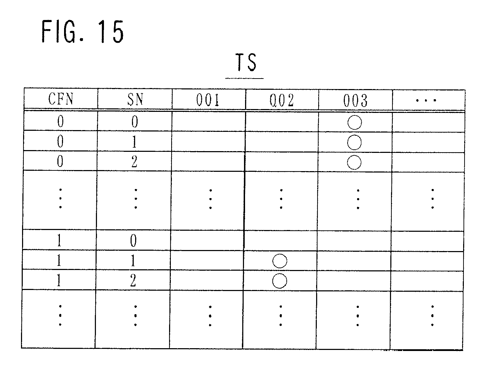

Fig. 15 is a diagram showing an example of a subframe check table.
Fig. 16 is a diagram showing an example of a functional structure of a conventional base station controller.
Fig. 17 is a flowchart for explaining a flow of a process about a packet in the conventional base station controller.
Fig. 18 is a flowchart for explaining a flow of a process about a packet in the conventional base station controller.
Fig. 19 is a diagram for explaining a structure of a packet based on E-DCH FP.

Hereinafter, the invention will now be described in detail with reference to the attached drawings.

Fig. 1 is a diagram showing an example of a mobile communication network MN according to an embodiment of the present invention.

The mobile communication network MN according to an embodiment of the present invention is a network for providing a user with a service of mobile communication, and it is made up of mobile terminals TR1, R2, ..., the base stations BT1, BT2, ..., the base station controllers RN1, RN2, ..., a core network CN, a communication network NT and the like as shown in Fig. 1. Hereinafter, the mobile terminals TR1, TR2, ..., the base stations BT1, BT2, ..., the base station controllers RN1, RN2, ... may be referred to as a "mobile terminal TR", a "base station BT" and a "base station controller RN", respectively, as generic names. As for other reference signs too, suffix serial numbers may be omitted in the same manner.

The base station BT is a base station in mobile communication. It may be called a "Node-B" or a "branch" or the like. The base station BT performs communication via a radio channel with a mobile terminal TR existing in a range (cell) where communication is available.

The mobile terminal TR is a mobile phone or a PDA or the like that is used by a user for receiving a service of the mobile communication. It may be called a "UE (User Equipment)" or the like.

When communication or the like is performed, the mobile terminal TR sends and receives data directly via a radio channel with a base station BT whose range where communication can be available (communication range) includes the mobile terminal TR. If there are plurality of base stations BT whose communication ranges include the mobile terminal TR, the mobile terminal TR4 performs transmission and reception of data with the plurality of base stations BT as shown in Fig. 1. Thus, even if a malfunction occurs in one of the base stations BT, for example, the other base stations BT can receive data from the mobile terminal TR4.

The base station controller RN is a RNC (Radio Network Controller) in the mobile communication. It may also be called a "radio network controller" or the like. This base station controller RN realizes high speed packet communication of the uplink by using the technique called "HSUPA (High-Speed Uplink Packet Access)".

As shown in Fig. 1, the base station controllers RN are connected to the plurality of base stations BT, respectively. The base station controller RN performs checking or the like of data transmitted from the base station BT, and converts normal data into a predetermined format so as to transmit them to the core network CN. In addition, it transmits data transmitted from the core network CN to an appropriate base station BT so that the data is received by a target mobile terminal TR.

The core network CN is a basic network in mobile communication, and it includes exchanges and the like. The core network CN transmits data transmitted from the base station controller RN to the communication network NT made up of the Internet or an intranet. In addition, it transmits data transmitted from the communication network NT to the base station controller RN.

Fig. 2 is a diagram showing an example of a functional structure of the base station controller RN, Fig. 3 is a diagram showing a structure of an E-DCH packet PD, Fig. 4 is a diagram for explaining a format of the E-DCH packet, Fig. 5 is a diagram showing explanations of parameters shown in Fig. 4, Fig. 6 is a diagram for explaining a process when the E-DCH packet PD is generated from base station data DK, Fig. 7 is a diagram showing a storage area that stores the E-DCH packet PD, Fig. 8 is a diagram showing an E-DCH packet check table TD, and Fig. 9 is a diagram showing an example of an ES packet check table TE.

Next, processes of individual portions of the base station controller RN shown in Fig. 2 will be described with reference to an example of a case where the uplink communication is performed by the mobile terminal TR4 included in the communication ranges of the base stations BT1, BT2 and BT3.

As shown in Fig. 2, the base station controller RN is made up of a data storing portion 101, a data receiving portion 102, a packet generating portion 103, a packet distribution processing portion 104, a first division processing portion 105, a defect checking and supplementing portion 106, a CRC check processing portion 107, a second division processing portion 108, a selection processing portion 109, an order correcting portion 110, a transmission processing portion 111 and the like. These functions can be realized by software, hardware or a combination of them.

The data storing portion 101 stores the "E-DCH packet PD", the "ES packet PE", the "E-DCH packet check table TD", the "ES packet check table TE" and the like, which will be described later.

The data transmitted from the mobile terminal TR4 (hereinafter may be referred to as "terminal data DT") are received by the base stations BT1, BT2 and BT3. Each base station BT transmits the terminal data DT plus additional predetermined information (hereinafter may be referred to as "base station data DK") to the base station controller RN.

The additional information includes, for example, numbers such as "CFN (Connection Frame Number)" related to time when the terminal data DT was processed, and "SN (Subframe Number)", a check bit related to error check such as CRC (Cyclic Redundancy Check), base station identification information indicating the base station BT that did the process, and the like. The base station identification information is information for identifying the base station. In the present embodiment, a base station number like "001", "002", ... is used as the base station identification information. It is supposed that the base station number is assigned to each base station BT in advance. CFN and SN will be described later in detail.

The data receiving portion 102 of the base station controller RN receives the base station data DK transmitted from each base station BT.

The packet generating portion 103 generates a data unit (packet) of a unit called "MAC-e PDU" based on E-DCH FP (Enhanced Dedicated Channel Frame Protocol) by using the received base station data DK. Hereinafter, this packet may be referred to as an "E-DCH packet PD".

In addition, it checks whether or not the generated E-DCH packet PD is normal. This check is performed by referring to, for example, header information of the E-DCH packet PD or a check bit or the like about error check such as CRC. If the E-DCH packet PD is not normal, the E-DCH packet PD is discarded as it is. Here, the E-DCH packet PD will be described with reference to Fig. 3.

As shown in Fig. 3, the E-DCH packet PD is made up of individual portions such as a "header portion", a "payload portion", an "option portion" and the like. Fig. 4 shows parameters about data included in these portions. Note that details of the parameters are as shown in Fig. 5. Here, principal parameters among them will be described.

The header portion is header information of the E-DCH packet PD. In Fig. 4, CFN included in the header portion is a number assigned every 10 milliseconds on a connection basis established between the mobile terminal TR and the base station controller RN. Each of the base stations receives the terminal data DT having the same contents from the mobile terminals TR4 at substantially the same timing, and it assigns the CFN every 10 milliseconds so as to generate the base station data DK. Therefore, the base station data DK in the base stations BT1, BT2 and BT3 to which the same CFN is assigned have the same contents. In addition, since the CFN is a number indicating the order in which the process was performed, the correct order of the base station data DK can be known from it.

The payload portion is the body of the data of the E-DCH packet PD. As shown in Fig. 3, it is made up of one or more packets of a unit called "subframe", and each subframe is made up of one or more MAC-es PDU's.

The MAC-es PDU is shown as a "first MAC-es PDU first subframe" or the like in Fig. 4. This MAC-es PDU includes order identifying information called a "TSN (Transmission Sequence Number)". This TSN is a number from "0" to "63" that indicates the order of the MAC-es PDU.

In addition, the MAC-es PDU is made up of one or more MAC-d PDU's or the like. The MAC-d PDU is indicated as "MAC-es SDU (1)" or the like in Fig. 4.

Each subframe is assigned a number called an "SN (Subframe Number)". Using this number, the subframe can be recognized and the order thereof can be specified in the E-DCH packet PD. The CFN and the SN are included in the base station data DK in advance, and the E-DCH packet PD is generated (assembled) based on the CFN and the SN.

Hereinafter, this subframe may be referred to as a "subframe SF". In addition, the MAC-es PDU may be referred to as an "ES packet PE".

The option portion includes data such as a check bit of CRC (hereinafter may be referred to as a "CRC value").

With reference to Fig. 2 again, the packet generating portion 103 generates the E-DCH packet PD based on the base station data DK in the order in which the data receiving portion 102 has received the base station data DK transmitted from each base station BT, and it delivers and stores the generated ones in the order of the generation. Here, a process when the E-DCH packet PD is generated from the transmitted base station data DK will be described with reference to Fig. 6. In Fig. 6, the base station data DK is denoted by reference sign including an alphabet and a numeral like "A1", "B2" or the like. The reference signs including the same alphabet denote base station data DK having the same CFN, i.e., the base station data DK based on the same terminal data DT. The reference signs including the same numeral denote the base station data DK transmitted from the same base station.

As shown in Fig. 6, each base station BT transmits the base station data DK based on the terminal data DT sequentially (i shown in Fig. 6). The data receiving portion 102 receives the base station data DK in the order of reception (ii). The packet generating portion 103 generates and delivers the E-DCH packet PD in the order in which the data receiving portion 102 has received (iii).

The packet generating portion 103 associates the generated E-DCH packet PD with a recording area MA of each corresponding base station BT (the base station BT that has transmitted the base station data DK based on which the E-DCH packet PD is generated) for each CFN as shown in Fig. 7. Note that the base station number "001", "002" and "003" correspond to the base stations BT1, BT2 and BT3, respectively in Fig. 7. For example, the E-DCH packet PD in which the CFN based on the base station data DK that was transmitted from the base station BT1 is "2" is stored in association with the CFN "2" in the storage area MA of the base station number "001". Thus, each E-DCH packet PD can be searched by using the base station BT and the CFN as keys. After that, the generated E-DCH packet PD undergoes a predetermined process performed by the packet distribution processing portion 104 and the like, and it is transmitted to the core network CN.

In the example shown in Fig. 2, the E-DCH packet PD is generated based on the base station data DK transmitted from the three base stations BT. Therefore, three E-DCH packets PD are generated for base station data DK having the same contents. In other words, three E-DCH packets PD are generated for one CFN each. Therefore, it is sufficient if one of the three is transmitted to the core network CN. In the present embodiment, the E-DCH packet PD generated based on the base station data DK that reaches the data receiving portion 102 earliest among the three, i.e., the E-DCH packet PD to be the first object of the process (hereinafter may be referred to as a "first E-DCH packet PD") is adopted (selected) as a transmission object.

However, there may be a case where the E-DCH packet PD with defect data partly is generated due to a malfunction or deterioration of channel quality, which may cause a drop (missing) of a part of the ES packet PE to be included in the E-DCH packet.

Since the first E-DCH packet PD is selected as the transmission object, if a problem such as a defect or the like occurs in the first E-DCH packet PD, it is necessary to compensate the defect by using data included in the other two E-DCH packets PD (hereinafter may be referred to as "second E-DCH packets PD") among the three.

Therefore, a process for dividing the E-DCH packet PD generated sequentially into the first E-DCH packet PD and the second E-DCH packets PD is performed.

The packet distribution processing portion 104 performs the process for dividing the generated E-DCH packet PD into the first E-DCH packet PD and the second E-DCH packets PD. This division process is performed by using the E-DCH packet check table TD shown in Fig. 8.

In Fig. 8, the E-DCH packet check table TD is a table for checking for which CFN the E-DCH packet PD to be the transmission object is already decided.

The E-DCH packet check table TD includes fields of the "CFN" and the base station number corresponding to the base station BT managed by the base station controller RN1, and records are stored for individual CFN's.

The fields of "001", "002" and "003" correspond to the base stations BT1, BT2 and BT3, respectively. It is true for the ES packet check table TE and the subframe check table TS that will be described later.

If a record has a mark "○ (flag)" in either one of the fields of the base station numbers, it means that the E-DCH packet PD of the transmission object is already decided for the CFN indicated in the record. In addition, which field is assigned "○" shows which E-DCH packet PD corresponding to which base station BT (the E-DCH packet PD based on the base station data DK transmitted from which base station BT) is selected as the transmission object. If a record has no field assigned "○", it means that the E-DCH packet PD of the transmission object is not decided yet for the CFN indicated in the record.

Here, the process performed by the packet distribution processing portion 104 will be described in more detail with reference to the E-DCH packet check table TD.

When the packet distribution processing portion 104 receives the generated E-DCH packet PD, it refers to the CFN indicated in the packet. Further, it searches the record of the CFN from the E-DCH packet check table TD and checks whether or not any field of "001", "002" or "003" of the record is assigned the mark "○".

If the mark "○" is not assigned, the E-DCH packet PD is decided to be a first of the E-DCH packets PD concerning the CFN (first E-DCH packet PD) and updates the record so that the field of the base station number of the base station BT corresponding to the E-DCH packet PD in the record is assigned the mark "○". Then, the E-DCH packet PD is sent to the first division processing portion 105. The corresponding base station BT can be known from the base station number included in the E-DCH packet PD, for example.

If none of the fields "001", "002" or "003" of the searched record is assigned the mark "○", the E-DCH packet PD is decided to be the second E-DCH packet PD. In this case, the E-DCH packet PD is sent to the CRC check processing portion 107.

The first division processing portion 105 divides the E-DCH packet PD received from the packet distribution processing portion 104, i.e., the E-DCH packet PD decided to be the first E-DCH packet PD by each ES packet PE (by a unit of the MAC-es PDU). Then, the ES packet PE obtained by the division is stored in the storage area of each base station BT and each CFN of the data storing portion 101 in association with each TSN.

After that, the ES packet PE obtained here undergoes the process as the data of the transmission object to the core network CN. The first division processing portion 105 updates the record of the ES packet check table TE shown in Fig. 9 in order to record which ES packet PE related to which TSN is obtained as the transmission object by the division.

In Fig. 9, the ES packet check table TE includes fields corresponding to the "TSN" and the base station number of the base station BT managed by the base station controller RN1, and the record is stored for each TSN.

If a record has a mark "○" in either one of the fields of the base station numbers, it means that the ES packet PE of the transmission object is already decided for the TSN indicated in the record. In addition, which field is assigned "○" shows which ES packet PE corresponding to which base station BT (the ES packet PE included in the E-DCH packet PD corresponding to which base station BT) is selected as the transmission object. If a record has no field assigned "○", it means that the ES packet PE of the transmission object is not decided yet for the TSN indicated in the record. Note that the ES packet check table TE is prepared for each CFN and is stored in the data storing portion 101 in association with each CFN.

When the first division processing portion 105 divides the E-DCH packet PD by each ES packet PE, it obtains first the ES packet check table TE that is saved in association with the CFN indicated in the E-DCH packet PD.

Then, it assigns the mark "○" to the field of the corresponding base station number of the record corresponding to the TSN indicated in the ES packet PE obtained by the division. If the E-DCH packet PD that was the object of the division corresponds to the base station BT1, for example, the mark "○" is assigned to the field "001". The record corresponding to the TSN indicated in every ES packet PE obtained by the division is updated.

The defect checking and supplementing portion 106 checks whether there is a lack (missing one) in the ES packet PE of the transmission object and perform a process for compensating the lack, if there is.

On this occasion, the defect checking and supplementing portion 106 obtains first the ES packet PE obtained by the division from the first division processing portion 105. Further, it refers to the TSN of each ES packet PE and checks whether there is a lack in the TSN. Note that checking is possible by referring to each record of the ES packet check table TE. In this case, the ES packet PE of the TSN indicated in the record where the mark "○" is not assigned corresponds to the lack.

If there is no lack, the ES packet PE is sent to the order correcting portion 110. If there is a lack, a timer is started so as to wait transmission of the ES packet PE corresponding to the lack from the selection processing portion 109 that will be described later. When it is transmitted, it is compensated. Then, if all the ES packets PE are prepared, they are sent to the order correcting portion 110. If the ES packet PE corresponding to the lack is not transmitted in the period until the started timer is time-out, only the ES packets PE that are prepared at that time are sent to the order correcting portion 110.

After the first E-DCH packet PD is selected as the transmission object, the second E-DCH packets PD corresponding to it are sent to the packet distribution processing portion 104 at certain timing. If it is checked whether or not the second E-DCH packets PD include the ES packet PE of the TSN that is not included in the first E-DCH packet PD, it is possible to check whether the ES packet PE of the TSN to be included truly was missing in the first E-DCH packet PD.

Therefore, in the conventional method described above with reference to Figs. 17 and 18, all the second E-DCH packets PD are also divided by the unit of the MAC-es PDU similarly to the case of the first E-DCH packet PD. Then, it is checked whether or not it is included in the first E-DCH packet PD for each MAC-es PDU (see #906 to #913).

However, if there is no lack in the first E-DCH packet PD, the processes of the division and the check are performed in vain for the second E-DCH packets PD. Therefore, in the present embodiment, a check using the CRC value is performed in advance so that the division process or the like is performed only for one that satisfies a predetermined condition based on the result thereof.

The CRC check processing portion 107 compares the CRC value of the first E-DCH packet PD with the CRC value of the corresponding second E-DCH packets PD ("payload CRC" shown in Fig. 4) so as to decide whether or not they are identical to each other. Thus, identity of both packets is checked. This decision is performed as follows.

First, the second E-DCH packet PD is obtained from the E-DCH packet distribution processing portion 104. The CFN indicated in the E-DCH packet PD is referred to. The record corresponding to the CFN is searched from the E-DCH packet check table TD. The base station number of the field in the record that is assigned the mark "○" is referred to. The first E-DCH packet PD stored in association with the CFN is obtained from the storage area MA corresponding to the base station number of the data storing portion 101. Then, a CRC value indicated in the second E-DCH packets PD is compared with a CRC value indicated in the obtained first E-DCH packet PD.

If the CRC values are equal to each other, it means that the contents of the first E-DCH packet PD are the same as those of the second E-DCH packets PD. If a defect occurs at the same portion in two E-DCH packets PD, the CRC value thereof may be the same. However, such situation does not occur so frequently. Therefore, in this case, the possibility is very low that there is a defect of data in the first E-DCH packet PD. Therefore, if it is decided that the CRC values are the same, the second E-DCH packets PD are discarded or left as they are without performing the division process or the like as the conventional method.

On the other hand, if the CRC values are not the same, the contents of the first E-DCH packet PD are not the same as those of the second E-DCH packets PD. This means that the process contents of the base station BT is different from the process contents in the other base station BT at the same time. In this case, the possibility is high that there is a defect of data in the first E-DCH packet PD or the second E-DCH packets PD. If there is a defect in the first E-DCH packet PD, it is necessary to divide the second E-DCH packets PD so as to compensate it. Therefore, in this case, the second E-DCH packets PD is sent to the second division processing portion 108.

The second division processing portion 108 divides one of the second E-DCH packets PD that is decided to have the CRC value that is not the same as the CRC value of the corresponding first E-DCH packet PD for each ES packet PE.

The selection processing portion 109 performs the process for selecting one of the ES packets PE that is obtained from the division process in the second division processing portion 108 and is to be the transmission object to the core network CN as follows.

First, the CFN of the second E-DCH packets PD and the ES packet PE obtained from the division of the second E-DCH packets PD are obtained from the second division processing portion 108. The ES packet check table TE stored in association with the CFN is referred to, so as to search the record having no mark "○" in any field of the base station. It is checked whether or not the ES packet PE corresponding to the TSN indicated in the hit record is in the obtained ES packet PE. If it is, it is understood that it is the missing ES packet PE in the corresponding first E-DCH packet PD. Therefore, in this case, it is selected as the transmission object and is sent to the defect checking and supplementing portion 106.

Furthermore, it is possible to compare the ES packet PE of the first E-DCH packet PD stored in the data storing portion 101 by the first division processing portion 105 with the ES packet PE obtained by the division in the second division processing portion 108. In this case, if the ES packet PE obtained by the division in the second division processing portion 108 includes one that is not stored as the ES packet PE of the first E-DCH packet PD, it is sent to the defect checking and supplementing portion 106 as the transmission object.

The order correcting portion (reordering portion) 110 sends the ES packet PE sent from the defect checking and supplementing portion 106 to the transmission processing portion 111 in the order of the TSN (ascending order). The transmission processing portion 111 transmits the ES packet PE to the core network CN in the order in which they have been transmitted. Note that if the interface of the core network CN supports the MAC-d PDU, it is divided by the unit of the MAC-d PDU and is transmitted.

Figs. 10, 11 and 12 are flowcharts for explaining a flow of a process from reception of the base station data DK to transmission of the E-DCH packet PD in the base station controller RN. Next, the processes of the individual portions in the base station controller RN will be described with reference to the flowcharts shown in Figs. 10, 11 and 12.

When the data is transmitted from the mobile terminal TR4, it is received by the base stations BT1, BT2 and BT3, which transmit it to the base station controller RN1.

In Fig. 2, the data receiving portion 102 of the base station controller RN receives the base station data DK transmitted from each base station BT (#101 in Fig. 10). The packet generating portion 103 generates the E-DCH packet PD based on the received base station data DK (#102), and it is checked whether or not the E-DCH packet PD is normal (#103). If it is not normal (No in #104), the E-DCH packet PD is discarded (#105). If it is normal (Yes in #104), it is stored in the storage area MA that can be searched by the corresponding base station BT and the CFN (#106). Here, it is supposed that the E-DCH packet PD1 having the CFN that is "2" is generated based on the base station data DK transmitted from the base station BT3.

When the packet distribution processing portion 104 obtains the generated E-DCH packet PD1, it refers to the E-DCH packet check table TD so as to check whether or not the E-DCH packet PD of the transmission object is already decided for the CFN that is "2" (#107).

If there is no field of the base station number assigned the mark "○" of the record having the CFN that is "2" in the E-DCH packet check table TD, it is understood that the transmission object is not decided for the CFN. Therefore, in this case (No in #107), the obtained E-DCH packet PD1 is selected as the transmission object and is sent to the first division processing portion (#108 in Fig. 11). In addition, the mark "○" is assigned to the field "003" of the record (the field corresponding to the base station BT3) (#109).

The first division processing portion 105 divides the transmitted E-DCH packet PD1 by each ES packet PE (#110), and each ES packet PE obtained by the division is stored in the storage area corresponding to the base station BT1 and the CFN"2" of the data storing portion 101 in association with each TSN (#111). Then, each ES packet PE is sent to the defect checking and supplementing portion 106 as the transmission object (#112). In addition, the TSN of each ES packet DE obtained by the division is referred to, so that the mark "○" is assigned to the field "003" of the record corresponding to each TSN that is referred to in the ES packet check table TE corresponding to the SFN "2" (#113).

The defect checking and supplementing portion 106 checks whether or not there is no lack in the ES packet PE based on the TSN of the transmitted ES packet PE (#114 in Fig. 12). If there is a lack (Yes in #114), a timer is started (#115) so as to wait for transmission of the ES packet PE corresponding to the lack. The ES packets PE that are transmitted during that period are retained and stored. If there is no lack (No in #114), the ES packets PE are sent to the order correcting portion 110.

The order correcting portion 110 checks the order of the transmitted ES packets PE based on the TSN (#116). If it conforms the order of the TSN (Yes in #116), they are sent to the transmission processing portion 111 as they are. If it does not conform the order (No in #116), it is corrected to be the order of the TSN and they are sent to the transmission processing portion 111 (#117).

The transmission processing portion 111 divides the transmitted ES packets PE by the unit of the MAC-d PDU as necessity in the order of the transmission (#118), and it transmits them to the core network CN (#119).

The packet generating portion 103 generates the E-DCH packet PD based on the base station data DK received by the data receiving portion 102 from each base station BT. The packet distribution processing portion 104 obtains the generated E-DCH packets PD sequentially and performs a process for distributing them. Then, the E-DCH packet PD having the CFN of "2" (referred to as an "E-DCH packet PD2", here) is obtained based on the base station data DK transmitted from a base station other than the base station BT3 at certain timing. It is supposed here that the E-DCH packet PD2 is the E-DCH packet PD based on the base station data DK transmitted from the base station BT1.

Since the mark "○" is assigned to the record having the CFN of "2" in the E-DCH packet check table TD, it is decided that the E-DCH packet PD of the transmission object is already selected for the CFN (Yes in #107 of Fig. 10). The packet distribution processing portion 104 sends the E-DCH packet PD (second E-DCH packets PD) to the CRC check processing portion 107.

The CRC check processing portion 107 searches the record from the E-DCH packet check table TD based on the CFN ("2") of the E-DCH packet PD2 obtained from the packet distribution processing portion 104. The E-DCH packet PD1 is obtained from the data storing portion 101 using the base station number ("003") and the CFN ("2") as keys that are obtained by referring to the record. Then, it is decided whether or not the CRC value of the E-DCH packet PD1 is the same as the CRC value of the E-DCH packet PD2 (#120).

If they are the same (Yes in #120), the E-DCH packet PD2 is discarded (#105). If they are not the same (No in #120), the E-DCH packet PD2 is sent to the second division processing portion 108.

The second division processing portion 108 divides the transmitted E-DCH packet PD2 by each ES packet PE (#121) and stores each of them in the storage area of the data storing portion 101 corresponding to the base station BT1 and the CFN of "2" for each TSN (#122). Then, information that they are stored is sent to the selection processing portion 109.

Then, the selection processing portion 109 obtains the ES packet PE obtained by the division process in the second division processing portion 108 (#123) and decides whether or not the ES packet PE of the transmission object is already selected for the TSN of the obtained ES packet PE (#124).

When this decision is performed, the ES packet check table TE corresponding to the CFN of "2" is referred to. If the mark "○" is assigned to the record of the corresponding TSN of the ES packet check table TE, it is decided that the ES packet PE of the transmission object is already selected for the TSN (Yes in #124). If it is decided that it is already selected, the ES packet PE is discarded (#125).

If the mark "○" is not assigned to the record of the corresponding TSN, it is decided that it is not selected yet (No in #124). The decision means that the ES packet PE of the TSN was missing in the E-DCH packet PD1. Therefore, in this case, in order to supplement the lack, the ES packet PE related to the decision is sent to the defect checking and supplementing portion 106 as the transmission object (#126). In addition, the mark "○" is assigned to the field corresponding to the base station 1 ("001") of the record of the TSN of the ES packet check table TE (#127). The process from the step #123 to the step #127 is performed on all the ES packets PE obtained by the division of the E-DCH packet PD2 (#128).

If there is a lack of the ES packet PE in the E-DCH packet PD1, the defect checking and supplementing portion 106 starts a timer and waits in order to supplement it. When the ES packets PE corresponding to the lack are transmitted before the time-up from the selection processing portion 109, the defect checking and supplementing portion 106 supplements it. If all the lack is supplemented, the ES packets PE are sent to the order correcting portion 110 (#129 in Fig. 12). If all the ES packets PE corresponding to the lack are not transmitted before the time-up, only the ES packets PE prepared at that time are sent to the order correcting portion 110 (#129).

After that, the ES packets PE sent to the order correcting portion 110 are sorted in the order of the TSN (#116 and #117), and are divided for each MAC-d PDU in the transmission processing portion 111 as necessity (#118), and are transmitted to the core network CN (#119).

Fig. 13 is a diagram showing another example of the functional structure of the base station controller RN.

As described above with reference to Fig. 3, the payload portion of the E-DCH packet PD includes data of the unit called the subframe SF. In the example shown in Fig. 2, similarly to the case where three E-DCH packets PD having the same CFN's and the same contents are generated each, three subframes SF having the same SN's and the same contents are generated each. Although the process for distributing by the unit of the E-DCH packet PD into the first E-DCH packet PD and the second E-DCH packets PD is performed in the example shown in Fig. 2, the process for distribution by the unit of the subframe SF is performed in Fig. 13. In this case, the subframe SF is distributed into the subframe SF that was the first object of the process among the three subframes having the same contents (hereinafter referred to as a "first subframe SF") and the other subframes SF (hereinafter referred to as "second subframes SF"). The first subframe SF is selected as the transmission object. The second subframes SF are processed as data for supplementing a lack in the first subframe SF if there is.

In Fig. 13, a data storing portion 101b stores the E-DCH packet PD, the "subframe check table TS", the ES packet check table TE and the like. In the data storing portion 101b, the ES packet check table TE is prepared for each combination of the CFN and the SN, and it is stored in association with each combination. Note that the subframe check table TS will be described later in detail. The data receiving portion 102 receives the base station data DK transmitted from each of the base stations BT.

A packet generating portion 103b generates the E-DCH packet PD by using the received base station data DK. In addition, it checks whether or not the generated E-DCH packet PD is normal. If it is normal, the E-DCH packet PD is stored in the data storing portion 101b.

The subframe distribution processing portion 112 obtains the E-DCH packet PD generated by the packet generating portion 103b and performs the process for distributing the subframes SF included in the E-DCH packet PD into the first subframe SF and the second subframe SF.

A first division processing portion 105b divides the first subframe SF into the ES packets PE and records the obtained ES packets PE in the ES packet check table TE shown in Fig. 9. A defect checking and supplementing portion 106b checks whether or not there is a lack in the ES packet PE obtained in the division process performed by the first division processing portion 105b. If there is a lack, the process for supplementing it is performed.

A CRC check processing portion 107b compares the CRC value of the second subframe SF with the CRC value of the corresponding first subframe SF so as to check whether or not they are the same.

A second division processing portion 108b divides one of the second subframes SF that is decided to have the CRC value different from that of the first subframe SF into the ES packets PE. A selection processing portion 109b performs the process for selecting one of the ES packets PE that is obtained in the division process performed by the second division processing portion 108b and is to be the transmission object to the core network CN.

The order correcting portion 110 sends the transmitted ES packets PE to the transmission processing portion 111 in the order of the TSN (ascending order). The transmission processing portion 111 divides the ES packets PE by the unit of the MAC-d PDU as necessity in the order of the transmission and transmits them to the core network CN.

Fig. 14 is a diagram showing a storage area that stores a subframe SF, and Fig. 15 is a diagram showing an example of a subframe check table TS.

Next, the processes of individual portions of a base station controller RNb shown in Fig. 13 will be described in more detail with reference to the flowcharts shown in Figs. 10, 11 and 12.

When the mobile terminal TR transmits data, it is received by the base stations BT1, BT2 and BT3, which transmit it to the base station controller RNb.

In Fig. 13, the data receiving portion 102 of the base station controller RNb receives the base station data DK transmitted from each base station BT (the step #101 in Fig. 10). The packet generating portion 103b generates the E-DCH packet PD based on the received terminal data DT (#102), and it checks whether or not the E-DCH packet PD is normal (#103). If it is not normal (No in #104), the E-DCH packet PD is discarded (#105). If it is normal (Yes in #104), the subframes SF included in the E-DCH packet PD are stored in the storage area MB of the data storing portion 101b for each base station BT in association with the CFN and the SN as shown in Fig. 14 (#106). The subframe SF can be specified by a combination of the CFN and the SN. In addition, the CRC values corresponding to the subframes SF, i.e., the CRC values indicated in the E-DCH packet PD including all the subframes SF are stored in association with each subframe SF. Here, it is supposed that the E-DCH packet PD1 is generated based on the base station data DK transmitted from the base station BT3.

The subframe distribution processing portion 112 obtains the generated E-DCH packet PD1. In addition, it extracts one of the subframes SF included in the E-DCH packet PD1 and decides whether the subframe SF (referred to as a "subframe SF1", here) is the first subframe SF or the second subframe SF, by using the subframe check table TS shown in Fig. 15 (#107). Here, this subframe check table TS will be described.

In Fig. 15, the subframe check table TS is a table for checking which combination of the CFN and the SN the subframe SF of the transmission object is already decided for.

The subframe check table TS includes fields of the "CFN", the "SN" and the base station number corresponding to the base station BT managed by the base station controller RN1, and the record is stored for each combination of the CFN and the SN.

If the record has any field of the base station number assigned the mark "○", it means that the subframe SF of the transmission object is already decided for a combination of the CFN and the SN indicated in the record. In addition, which field is assigned "○" shows which subframe SF corresponding to which base station BT (the subframe SF included in the E-DCH packet PD based on the base station data DK transmitted from which base station BT) is selected as the transmission object. If a record has no field assigned "○", it means that the subframe SF of the transmission object is not decided yet for a combination of the CFN and the SN indicated in the record.

With reference to Fig. 13 again, the subframe distribution processing portion 112 refers to the CFN of the obtained E-DCH packet PD and the SN of the subframe SF1 extracted from it. Here, it is supposed that the referred CFN and SN are "2" and "1", respectively. The record corresponding to the combination of the referred CFN and SN is searched from the subframe check table TS, and it is checked whether or not the record is assigned the mark "○".

If the mark "○" is not assigned to any field of the base station number in the record having the CFN of "2" and the SN of "1" in the subframe check table TS, it means that the subframe SF of the transmission object is not decided yet for the combination of the CFN and the SN. Therefore, in this case (No in #107), the subframe SF1 is selected as the transmission object (#108 in Fig. 11), and the mark "○" is assigned to the field "003" of the record (the field corresponding to the base station BT3) (#109). Then, information of the CFN ("2") and the base station number ("003") is sent to the first division processing portion 105b, and the subframe SF1 is sent to the same.

The first division processing portion 105b divides the transmitted subframe SF1 into the ES packets PE (#110). The ES packets PE obtained by the division are stored for each TSN in the storage area in the data storing portion 101b corresponding to the base station number ("003") and the CFN ("2") transmitted from the subframe distribution processing portion 112, and the SN ("1") indicated in the subframe 1 (#111). Then, each ES packet PE is sent to the defect checking and supplementing portion 106b as the transmission object (#112).

In addition, the ES packet check table TE corresponding to the combination of the CFN of "2" and the SN of "1" is updated. In other words, the mark "○" is assigned to the field "003" of the record corresponding to the TSN indicated in each ES packet DE of the ES packet check table TE (#113).

The defect checking and supplementing portion 106b checks whether or not there is a missing ES packet PE based on the TSN of the transmitted ES packet PE (#114 in Fig. 12). If there is a lack (Yes in #114), a timer is started (#115) so as to wait for transmission of the ES packet PE corresponding to the lack. If there is no lack (No in #114), the ES packets PE are sent to the order correcting portion 110.

The order correcting portion 110 checks the order of the transmitted ES packets PE based on the TSN (#116). If the order is the same as the order of the TSN (Yes in #116), they are sent to the transmission processing portion 111 as they are. If the order is not the same as the order of the TSN (No in #116), they are corrected in the order of the TSN and are sent to the transmission processing portion 111 (#117).

The transmission processing portion 111 divides the transmitted ES packets PE as necessity by the unit of the MAC-d PDU (#118) and transmits them to the core network CN (#119).

The packet generating portion 103b generates the E-DCH packets PD based on the base station data DK received by the data receiving portion 102 from the base stations BT. The subframe distribution processing portion 112 obtains the generated E-DCH packets PD sequentially and performs the process for distributing the subframes SF included in it. Then, the subframe SF (referred to as a "subframe SF2", here) having the SN of "1" included in the E-DCH packet PD having the CFN of "2" (referred to as an "E-DCH packet PD2", here) is extracted as the object of the distribution at certain timing. It is supposed that the E-DCH packet PD2 is generated based on the base station data DK from the base station BT1.

Since the mark "○" is already assigned to the record of the combination of the CFN "2" and the SN "1" in the subframe check table TS, it is decided that the subframe SF of the transmission object is already decided for the combination of the CFN and the SN (Yes in #107 shown in Fig. 10).

The subframe distribution processing portion 112 sends the subframe SF2 to the CRC check processing portion 107b together with the corresponding base station number ("001"), the CFN ("2") and the CRC value.

The CRC check processing portion 107b compares the CRC value of the subframe SF2 with the CRC value of the corresponding first subframe SF1 so as to check whether or not they are the same.

On this occasion, the CRC check processing portion 107b first searches the record from the subframe check table TS by using keys that are the CFN ("2") received from the subframe distribution processing portion 112 and the SN ("1") indicated in the subframe SF2. Since the subframe SF1 is already selected as the transmission object for the combination of the CFN and the SN, the mark "○" is assigned to the field "003" in the hit record. The CRC check processing portion 107b obtains the base station number ("003") for the base station BT corresponding to the subframe SF1 based on the record.

The CRC value of the subframe SF1 is obtained from the data storing portion 101b by using the base station number ("003"), the CFN ("2") and the SN ("1") as keys. Then, it is decided whether or not the obtained CRC value is the same as the CRC value of the subframe SF2 received from the subframe distribution processing portion 112 (#120).

If they are the same (Yes in #120), the subframe SF2 is discarded (#105). If they are not the same (No in #120), the subframe SF2 is sent to the second division processing portion 108b. At the same time, information of the base station number ("001"), the CFN ("2") and the SN ("1") corresponding to the subframe SF2 is sent to the same.

The second division processing portion 108b divides the transmitted subframe SF2 into ES packets PE (#121) and stores them for each TSN in the storage areas corresponding to the base station, the CFN and the SN (#122). Then, information that they have been stored is sent to the selection processing portion 109. At the same time, information of the base station number ("001") corresponding to the subframe SF2, the CFN ("2") and the SN ("1") is sent to the same.

Then, the selection processing portion 109b obtains the ES packet PE obtained in the division performed by the second division processing portion 108b (#123) and decides whether or not the ES packet PE of the transmission object is already selected for the TSN of the obtained ES packet PE (#124).

When this decision is performed, the ES packet check table TE corresponding to the combination of the CFN of "2" and the SN of "1" is referred to. If the mark "○" is assigned to the record of the corresponding TSN in the ES packet check table TE, it is decided that the ES packet PE of the transmission object is already selected for the TSN (Yes in #124). If it is decided that it is already selected, the ES packet PE is discarded (#125).

If the mark "○" is not assigned to the record of the corresponding TSN, it is decided that the ES packet PE of the transmission object is not selected yet (No in #124). The fact that it is not selected yet means that there is a lack of the ES packet PE of the TSN in the subframe SF1. Therefore, in this case, in order to supplement the lack, the ES packet PE related to the decision is sent to the defect checking and supplementing portion 106b as the transmission object (#126). In addition, the mark "○" is assigned to the field of the corresponding base station number ("001") of the record of the TSN in the ES packet check table TE (#127). The process from the step #123 to the step #127 is performed with respect to all the ES packets PE obtained in the division of the subframe SF2 (#128).

If there is a lack of the ES packet PE in the subframe SF1, the defect checking and supplementing portion 106b starts a timer and waits in order to supplement it. If the ES packet PE corresponding to the lack is transmitted from the selection processing portion 109b during the period before the time-up, the defect checking and supplementing portion 106b supplements it. Thus, if all the ES packets PE corresponding to the lack are supplemented, the ES packets PE are sent to the order correcting portion 110 (#129 in Fig. 12). If all the ES packets PE corresponding to the lack are not transmitted before the time-up, only the ES packets PE prepared at that time are sent to the order correcting portion 110 (#129).

After that, the ES packets PE sent to the order correcting portion 110 are sorted in the order of the TSN (#116 and #117), and are divided for each MAC-d PDU in the transmission processing portion 111 as necessity (#118), and are transmitted to the core network CN (#119).

According to the present embodiment, check of identity between the packets is performed by using the CFN and the CRC value (or the CFN, the SN and the CRC value) noting the multiple structure of the E-DCH. Since the check is performed in advance, the packet having the same contents as the packet that has been processed before can be filtered so that such a packet can be discarded at that time point. Then, it is possible to save the needless process on the packet that will be discarded that is performed in the conventional method.

In addition, the packet having the same CFN (or the same CFN and the same SN) and the different CRC value as the packet that have been processed before is divided by the unit of the MAC-es PDU as with the conventional method, and it is decided whether or not it is adopted as the transmission object for each MAC-es PDU. More specifically, the MAC-es PDU missing in the packet that has been processed before is selected as the transmission object. Thus, even if there is a defect in the packet that has been processed before, it can be supplemented by using the packet that will be processed later and has the same contents. In other words, it is possible to combine the packets so as to supplement the defect portion.

Therefore, according to the present invention, process efficiency can be improved while securing reliability of the data. The present invention can be used preferably in particular for the HSUPA.

Although the example of the case where the base station controller RN receives data from the base station BT is described above in the present embodiment, it is possible to adopt another structure in which the data is received from another base station controller RN or from both the other base station controller RN and the base station BT.

Note that the terminal data DT and the base station data DK may be the data (packet) of the unit of the MAC-e PDU. Alternatively, it may be the data (packet) of the unit of the MAC-es PDU. Alternatively, it may be the data (packet) of the unit of the subframe.

Furthermore, the structures and the functions of the individual portions of the mobile communication network MN, the base station controllers RN and RNb, the structures of the tables, the contents of the data, the process contents and the process order and the like can be modified if necessary in accordance with the spirit of the present invention.

While example embodiments of the present invention have been shown and described, it will be understood that the present invention is not limited thereto, and that various changes and modifications may be made by those skilled in the art without departing from the scope of the invention as set forth in the appended claims and their equivalents, as interpreted by the description and drawings.

## Claims

1. A packet processing method with respect to a packet (PD) generated based on data received by a plurality of branches (BT) from a mobile terminal (TR) in mobile communication, the packet processing method
**characterized by**:
a first decision step for deciding whether or not a packet (PD) has the same contents as a packet (PD) that has been processed before the packet (PD);
a division step for dividing the packet (PD) subjected to the first decision into small packets (PE) of a smaller unit if the packet (PD) is decided not to have the same contents in the first decision step;
a second decision step for deciding whether or not each of the small packets (PE) obtained by the division should be a transmission object to be transmitted to the other end of the communication with the mobile terminal (TR); and
a transmission step for transmitting the small packet (PE) that is decided to be the transmission object in the second decision step, wherein
if the packet (PD) is decided to have the same contents in the first decision step, the packet (PD) is discarded without performing processes of the division step, the second decision step and the transmission step with respect to the packet (PD).

2. The packet processing method according to claim 1, **characterized in that** the packet processing method is used in an HSUPA service.

3. The packet processing method according to claim 1 or 2, **characterized in that** the packet (PD) generated based on the received data is a packet based on E-DCH FP.

4. The packet processing method according to any one of claims 1 to 3, **characterized in that** the small packet (PE) is MAC-es PDU.

5. The packet processing method according to any one of claims 1 to 4, **characterized in that** the first decision step includes deciding that the packet (PD) has the same contents if CFN included in the packet is the same.

6. The packet processing method according to any one of claims 1 to 4, **characterized in that** the first decision step includes deciding that the packet (PD) has the same contents if CFN and SN included in the packet are the same.

7. The packet processing method according to any one of claims 1 to 4, **characterized in that** the first decision step includes deciding that the packet (PD) has the same contents if CFN and a CRC value included in the packet are the same.

8. The packet processing method according to any one of claims 1 to 4, **characterized in that** the first decision step includes deciding that the packet (PD) has the same contents if CFN, SN and a CRC value included in the packet are the same.

9. The packet processing method according to claim 7, **characterized in that** as for the packet (PD) that is decided not to have the same contents because of the CFN is different in the first decision step, all the small packets (PE) included in the packet (PD) are decided to be the transmission objects without performing the process of the second decision step.

10. The packet processing method according to claim 8, **characterized in that** as for the packet (PD) that is decided not to have the same contents because of the CFN and the SN are the same but the CRC value is different in the first decision step, all the small packets (PE) included in the packet (PD) are decided to be the transmission objects without performing the process of the second decision step.

11. The packet processing method according to any one of claims 1 to 10, **characterized in that** the branch (BT) is a base station or a base station controller in mobile communication.

12. A packet processing system that performs a process with respect to a packet (PD) generated based on data received by a plurality of branches (BT) from a mobile terminal (TR) in mobile communication, the packet processing system **characterized by**:
a first deciding portion (104) that decides whether or not a packet (PD) has the same contents as a packet that has been processed before the packet (PD);
a dividing portion (108) that divides the packet (PD) subjected to a process performed by the first deciding portion (104) into small packets (PE) of a smaller unit if the packet (PD) is decided not to have the same contents by the first deciding portion (104);
a second deciding portion (109) that decides whether or not each of the small packets (PE) obtained by the division should be a transmission object to be transmitted to the other end of the communication with the mobile terminal (TR); and
a transmitting portion (111) that transmits the small packet (PE) that is decided to be the transmission object by the second deciding portion (109), wherein
if the packet (PD) is decided to have the same contents by the first deciding portion (104), the packet is (PD) discarded without performing processes by the dividing portion (108), the second deciding portion (109) and the transmitting portion (111) with respect to the packet (PD).

13. The packet processing system according to claim 12, **characterized in that** the packet processing system is a base station controller in mobile communication.

14. The packet processing system according to claim 12 or 13, **characterized in that** the branch (BT) is a base station or a base station controller in mobile communication.

15. A computer program for use in a computer (RN) that performs a process with respect to a packet (PD) generated based on data received by a plurality of branches (BT) from a mobile terminal (TR) in mobile communication, the computer program making the computer (RN) perform processes comprising:
a first decision process for deciding whether or not a packet (PD) has the same contents as a packet that has been processed before the packet (PD);
a division process for dividing the packet (PD) subjected to the first decision process into small packets (PE) of a smaller unit if the packet is decided not to have the same contents in the first decision process;
a second decision process for deciding whether or not each of the small packets (PE) obtained by the division should be a transmission object to be transmitted to the other end of the communication with the mobile terminal (TR); and
a transmission process for transmitting the small packet (PE) that is decided to be the transmission object in the second decision process, wherein
if the packet (PD) is decided to have the same contents in the first decision process, the packet (PD) is discarded without performing the division process, the second decision process and the transmission process with respect to the packet (PD).
